(19) Europäisches Patentamt
European Patent Office
Office européen des brevets

(11) EP 0 564 901 B1

(12) **EUROPÄISCHE PATENTSCHRIFT**

(45) Veröffentlichungstag und Bekanntmachung des Hinweises auf die Patenterteilung:
**26.11.1997 Patentblatt 1997/48**

(51) Int. Cl.$^6$: **B23D 33/02**

(21) Anmeldenummer: **93104838.3**

(22) Anmeldetag: **24.03.1993**

(54) **Vorschubeinrichtung für Tafeln**

Feeding device for panels

Dispositif d'avance pour tôle

(84) Benannte Vertragsstaaten:
**AT BE CH DE ES FR GB IT LI NL SE**

(30) Priorität: **07.04.1992 DE 4211658**

(43) Veröffentlichungstag der Anmeldung:
**13.10.1993 Patentblatt 1993/41**

(73) Patentinhaber:
**Krupp Kunststofftechnik GmbH**
**45143 Essen (DE)**

(72) Erfinder:
• **Lentz, Norbert, Dr.-Ing.**
**W-4300 Essen 15 (DE)**
• **Schmidt, Harald, Dipl.-Ing.**
**W-5163 Langerwehe (DE)**

(56) Entgegenhaltungen:
EP-A- 0 095 955        WO-A-91/06408
DE-A- 2 425 948        FR-A- 1 490 870
US-A- 1 868 707        US-A- 2 355 079
US-A- 2 484 845        US-A- 2 547 964
US-A- 2 554 095        US-A- 2 623 746
US-A- 2 769 528        US-A- 4 586 612

**Beschreibung**

Die Erfindung betrifft eine Vorschubeinrichtung mit einem mit konstanter Geschwindigkeit umlaufenden, mit Mitnehmerklinken versehenen Zugmittel zum Transportieren von Tafeln in eine Arbeitsstation mit gleichbleibender Durchlaufgeschwindigkeit, in die die Tafeln mit einer Anfangsgeschwindigkeit einlaufen, die mindestens so groß ist wie die Umlaufgeschwindigkeit des Zugmittels bzw. der Mitnehmerklinken.

Das Zugmittel der Vorschubeinrichtung kann insbesondere als Kette ausgebildet sein. Als Tafeln kommen vorzugsweise Blechtafeln oder Blechstreifen, aber auch Zuschnitte in Frage. Eine typische Arbeitsstation, in die Tafeln eintreten, ist eine Rund- oder Rollenmesserschere, bei der die Durchlaufgeschwindigkeit gleichbleibend ist und der Anfangsgeschwindigkeit entspricht. Die Anfangsgeschwindigkeit, mit der die Tafeln in die Arbeitsstation eingezogen werden, darf auf keinen Fall kleiner sein als die Vorschubgeschwindigkeit, da es sonst zu einer Stauchung der Tafeln kommt. In der Praxis wird die Anfangsgeschwindigkeit der Arbeitsstation etwas größer als die der Vorschubeinrichtung gewählt.

Rollenmesserscheren schneiden Blechtafeln, z.B. Weißblechtafeln für Blechverpackungen, in einer ersten Operation in Streifen und die Streifen anschließend in einer zweiten Operation in Zuschnitte. Bekannte Vorschubeinrichtungen sowohl für Blechtafeln als auch für Blechzuschnitte weisen einen Kettenvorschub auf, dessen Umlaufgeschwindigkeit kleiner ist als die Umfangs- oder Einzugsgeschwindigkeit der Rollenmesser. Zum parallelen Ausrichten und zur Beschleunigung der Blechtafeln bzw. Blechstreifen annähernd an die Geschwindigkeit der Rollenmesser wird der Vorschubeinrichtung nach dem Stand der Technik ein Klinkenvorschub mit linear hin- und hergehenden Klinkenschienen nachgeschaltet.

Die Durchsatzleistung der Rollenmesserschere wird wesentlich durch den Hub, die Funktion und die Hubfrequenz des oszillierenden Klinkenschiebertriebs bestimmt. Macht der Schiebertrieb z.B. sieben Hübe/Tafel, so müssen für eine Ausbringung von 40 Tafeln/min 280 Hübe/min bei einem Hub von ca. 100 mm erreicht werden. Je nach Hubfunktion treten dabei enorme Beschleunigungen und Massenkräfte auf. Selbst die genannte Ausbringung ist nur mit großem Aufwand an Fertigungsgenauigkeit und mit leichten Werkstoffen erreichbar. In jedem Fall unterliegt der Schiebertrieb infolge der hohen Massenkräfte einem großen Verschleiß und erzeugt eine hohe Geräuschimmission.

Der Erfindung liegt die Aufgabe zugrunde, eine Vorschubeinrichtung der eingangs genannten Art derart zu verbessern, daß bei gleichem Verschleiß bzw. gleicher Geräuschimmission eine höhere Ausbringung (Tafeln/min) bzw. bei gleicher Ausbringung ein geringerer Verschleiß und eine geringere Geräuschimmission erzielt werden können.

Diese Aufgabe wird erfindungsgemäß zunächst dadurch gelöst, daß im Bereich der Vorschubeinrichtung eine weitere Vorschubeinrichtung angeordnet ist, die ein von einer Antriebsanordnung angetriebenes umlaufendes Zugmittel mit einer quer zur Vorschubrichtung angeordneten Mitnehmeranordnung aufweist. Die Mitnehmeranordnung erreicht im Bereich des Obertrum des Zugmittels zumindest zu einem Zeitpunkt eine Geschwindigkeit, die größer oder gleich der Umlaufgeschwindigkeit der ersten Vorschubeinrichtung und zu diesem oder einem anderen Zeitpunkt eine Geschwindigkeit, die kleiner oder gleich der Anfangsgeschwindigkeit der Antriebsstation ist.

Die Aufgabe wird zusätzlich einerseits dadurch gelöst, daß das umlaufende Zugmittel des weiteren Vorschubs durch die Antriebsanordnung mit periodisch variabler Umlaufgeschwindigkeit bewegbar ist, deren Minimum kleiner oder gleich der Umlaufgeschwindigkeit der ersten Vorschubeinrichtung und deren Maximum größer als die Umlaufgeschwindigkeit der ersten Vorschubeinrichtung und kleiner oder gleich der Anfangsgeschwindigkeit in der Arbeitsstation ist, und daß sich die Mitnehmeranordnung zumindest am Ende der Beschleunigungsphase im Bereich des Obertrum befindet.

Während der Endphase der Beschleunigung überholt die Mitnehmeranordnung der weiteren Vorschubeinrichtung die Mitnehmer der ersten Vorschubeinrichtung. Dabei erfassen sie die Hinterkante der Tafel und bewegen diese von der ursprünglich im Eingriff befindlichen Mitnehmerklinke der ersten Vorschubeinrichtung nach vorne fort. Bei der weiteren Beschleunigung erreichen Sie annähernd die Geschwindigkeit der Arbeitsstation, z.B. die (konstante) Umlaufgeschwindigkeit der Messerkörper einer Rollenmesserschere. Nach der Übernahme der Tafel durch die Arbeitsstation (der Rollenmesserschere) verringert sich die Umlaufgeschwindigkeit der weiteren Vorschubeinrichtung in Richtung auf ein Geschwindigkeitsminimum, so daß ein Abstand zwischen der Tafel und den Mitnehmerklinken entsteht.

Die der Erfindung zugrunde liegende Aufgabe wird andererseits zusätzlich dadurch gelöst, daß die Mitnehmeranordnung Mitnehmerklinken aufweist, die von vor dem Übergang aus der geradlinigen Bewegung des Obertrum in die Umlenkbewegung Richtung Untertrum zumindest bis in einen Anfangsbereich der Umlenkbewegung hinein eine unterhalb der Transportebene der Blechtafeln befindliche Position einnehmen.

Die Mitnehmerklinken eines Zugmittelvorschubs reichen zum Vorschub einer Tafel notwendigerweise in der Höhe über das Zugmittel hinaus. Beim Übergang von der geradlinigen Bewegung des Ober- bzw. Untertrum in die kreisförmige Umlenkbewegung wird die Oberkante der Mitnehmerklinke im Verhältnis des Höhenunterschiedes schneller als die Umlaufgeschwindigkeit des Zugmittels bewegt. Die von der Vorschubeinrichtung geschobene Tafel erfährt somit im Übergangsbereich eine ungewollte Beschleunigung, die eine Stauchung und im Extremfall sogar eine Beschädigung der Tafel zur Folge haben kann.

Bei einer Vorschubeinrichtung gemäß der zweiten Lösung ergibt sich als Vorteil, daß die weitere Vorschubeinrichtung auch dann mit einer konstanten Umlaufgeschwindigkeit betrieben werden kann, wenn die Umlaufgeschwindigkeit gleich der Anfangsgeschwindigkeit - allgemein: der (konstanten) Geschwindigkeit - der Arbeitsstation ist.

Obwohl die technischen Lehren sowohl des Anspruchs 1 als auch des Anspruchs 2 die der Erfindung zugrunde liegende Aufgabe grundsätzlich unabhängig voneinander zu lösen vermögen, führt eine Kombination beider Lehren natürlich zu noch besseren Ergebnissen in der Praxis. So kann bei dieser Kombination z.B. das Maximum einer periodischen Geschwindigkeit der Mitnehmerklinken der zweiten Vorschubeinrichtung bis in den Umlenkpunkt gelegt werden.

Eine periodisch variable Umlaufgeschwindigkeit der Mitnehmeranordnung der weiteren Vorschubeinrichtung wird vorzugsweise durch ein Kreuzgelenk erreicht, über das die weitere Vorschubeinrichtung mit dem Antrieb verbunden ist. Während die pulsierende Abweichung von dem genauen Rundlauf bei einem Kreuzgelenk im allgemeinen eher störend in Kauf genommen wird, wird die Wirkung des Kreuzgelenks im vorliegenden Fall bewußt zur Verwirklichung einer gewollten Wirkung eingesetzt.

Während bei der Z-förmigen Anordnung einer Gelenkwelle, deren Gelenkachsen bzw. Gelenkgabeln in einer gemeinsamen Ebene liegen, die Pulsation ausgeglichen wird, verstärkt sich die Pulsation, wenn zwischen der Achse des weiteren Vorschubs und der Welle des Antriebs ein zweites Kreuzgelenk vorgesehen ist, die Achse des weiteren Vorschubs, die zwischen den Kreuzgelenken angeordnete Gelenkwelle und die Achse des Antriebs eine Z-förmige Anordnung aufweisen, und die Kreuzgelenkachsen der Gelenkwelle bzw. deren Gelenkgabeln um 90° gegeneinander verdreht sind.

Damit die Mitnehmerklinken der weiteren Vorschubeinrichtung eine unterhalb der Transportebene der Blechtafeln befindliche Position einnehmen können, ist die Mitnehmerklinke in einem Klinkenhalter gelagert, der um eine - in Vorschubrichtung gesehen - vordere, waagerechte Achse am umlaufenden Zugmittel schwenkbar gelagert ist und in Richtung auf die Mitte des Zugmittels durch eine Federvorspannung beaufschlagt. Die Beaufschlagung des Klinkenhalters erfolgt dabei gegen eine feststehende Führungsbahn, die im Bereich des Obertrum einen parallel zur Vorschubebene gehaltenen Verlauf und vor dem Übergang in die Umlenkung zum Untertrum einen Abstand zur Vorschubebene aufweist.

Ausführungsbeispiele der Erfindung sind in der Zeichnung z.T. stark schematisiert dargestellt und werden im folgenden näher erläutert. Es zeigen

Fig. 1    den prinzipiellen Aufbau einer erfindungsgemäßen Vorschubanordnung in einer Seitenansicht,

Fig. 2    die über eine Gelenkwelle mit einem Antrieb verbundene zweite Vorschubeinrichtung der Vorschubanordnung in einem Querschnitt längs der Linie II-II in Fig. 1,

Fig. 3    den Verlauf der Umfangsgeschwindigkeit der zweiten Vorschubeinrichtung in Abhängigkeit von dem Drehwinkel des Antriebs im Verlauf einer Umdrehung des Antriebs,

Fig. 4    eine andere Ausführungsform der zweiten Vorschubeinrichtung in einem Längsschnitt,

Fig. 5    die Ausführungsform nach Fig. 4 in einer Stirnansicht von rechts unter teilweiser Weglassung des Zahnriemens,

Fig. 6    die Klinkenanordnung der Ausführungsform nach Fig. 4 im Bereich des Obertrum,

Fig. 7    die Klinkenanordnung in der Draufsicht und

Fig. 8    die Klinkenanordnung kurz vor dem Umlenken in Richtung auf das Untertrum.

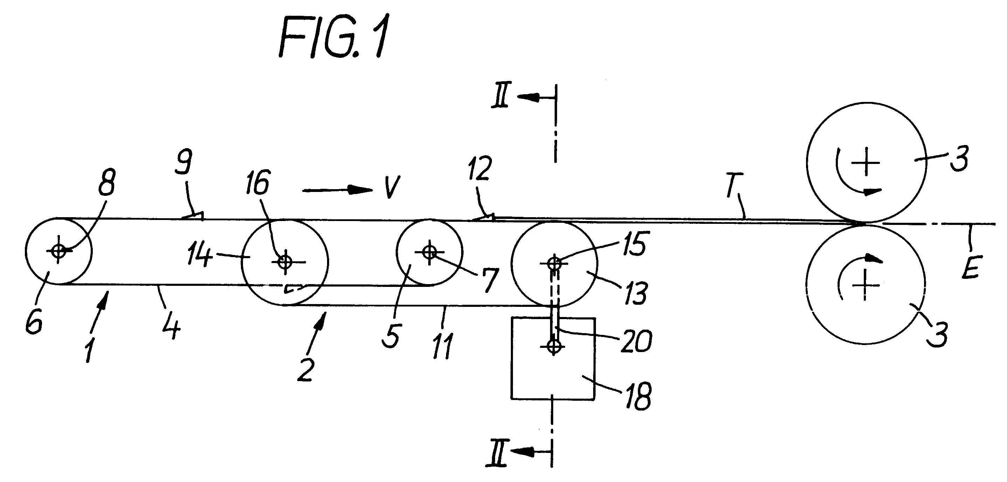

Die Vorschubanordnung gemäß Fig. 1 weist eine erste und eine zweite Vorschubeinrichtung 1 bzw. 2 auf, deren Bereiche sich - in Vorschubrichtung V gesehen - überschneiden. In einem Abstand zur zweiten Vorschubeinrichtung 2 ist ein Paar von Rollenmesserscheren 3 angeordnet.

Die erste Vorschubeinrichtung 1 weist zwei in einem seitlichen Abstand voneinander angeordnete Ketten 4 auf, die jeweils um ein vorderes und ein hinteres Kettenrad 5, 6 umlaufen. Das vordere bzw. hintere Kettenrad 5, 6 sind jeweils auf einer Welle 7 bzw. 8 befestigt. Die vordere Welle 7 ist in bekannter Weise mit einem (nicht dargestellten) Antrieb verbunden, der der Kette 4 eine konstante, einstellbare Geschwindigkeit verleiht.

In Abhängigkeit von der Länge der zu transportierenden Blechtafeln T besitzen die Ketten 4 je eine oder mehrere Klinken 9, die jeweils zusammen mit der entsprechenden Klinke der anderen Kette senkrecht zur Vorschubrichtung V fluchtend ausgerichtet sind.

Die zweite Vorschubeinrichtung 2 weist zwei in einem seitlichen Abstand voneinander angeordnete, jeweils um eine vordere und eine hintere Zahnscheibe 13 bzw. 14 umgelenkte Zahnriemen 11 mit jeweils einer Mitnehmerklinke 12 auf. Die Zahnscheiben 13 bzw. 14 sind paarweise auf gemeinsamen Wellen 15, 16 befestigt. Die hintere Welle 16 ist zwischen den Wellen 7, 8 der ersten Vorschubeinrichtung 1 angeordnet und die vordere Welle 15 zwischen der ersten Vorschubeinrichtung 1 und dem Rollenmesserwellenpaar 3. Die Vorschubeinrichtung 2 ist so eingerichtet, daß die beiden Mitnehmerklinken 12 parallel zu den Wellen der Rollenmesserscheren 3 fluchten.

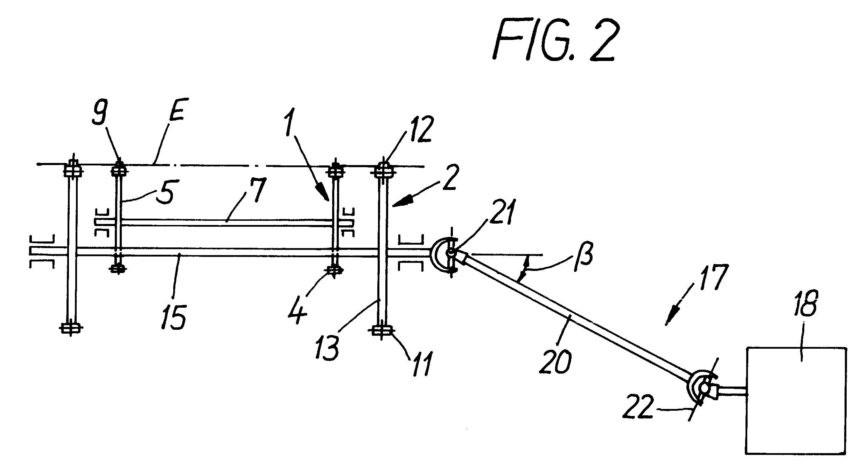

Das Obertrum der Zahnriemen 11 weist die gleiche Höhe auf wie das Obertrum der Kette 4. Im Querschnitt gesehen (vgl. Fig. 2) sind die beiden Riemen 11 außen neben den Ketten 4 angeordnet. Die vordere Welle 15 ist über eine Z-förmige Gelenkwellenanordnung 17 mit einem Antrieb 18 mit einstellbarer konstanter Drehzahl $n0$ bzw. konstanter Winkelgeschwindigkeit $\omega 0$ verbunden. Die als Keilprofil-Wellenverbindung ausgebildete eigentliche Gelenkwelle 20 ist gegenüber der Welle 15 und der Welle des Antriebs 18 unter einem Beugewinkel $\beta$ geneigt. Die Gabeln bzw. die Kreuzgelenkachsen 21, 22 der Gelenkwelle 18 sind - anders als allgemein üblich - um 90° gegeneinander verdreht (während die linke Kreuzgelenkachse 21 quer zur Zeichenebene der Fig.2 ausgerichtet ist, liegt die Kreuzgelenkachse 22 innerhalb der Zeichenebene). Durch diese Anordnung erfahren die Zahnscheiben 13 auf der Welle 15 eine ungleichmäßige, mit $2\,\omega 0$ pulsierende Winkelgeschwindigkeit $\omega 15 = \omega 13$ und die Zahnriemen 11 mit den Mitnehmerklinken 12 eine entsprechend pulsierende Umlaufgeschwindigkeit $v11 = v12$ .

Die Winkelgeschwindigkeit $\omega 13$ bzw. $\omega 15$ für eine über ein Kreuzgelenk verbundene angetriebene Welle ist nach Dubbel, Taschenbuch für den Maschinenbau, 15. Auflage, Berlin, Heidelberg, New York, Tokyo: Springer, 1983, S. 409, Abs. 4.2.2,

$$\omega 13 = \omega 15 = \omega 0 \cdot \cos\beta/(1 - \sin^2\beta \cos^2\alpha)$$

wobei $\alpha$ den Drehwinkel der Welle des Antriebs 18 bedeutet.

Bei der Z-förmigen Ausbildung der Gelenkwellenanordnung und dem beschriebenen Verdrehen der Kreuzgelenkachsen 21, 22 der mittleren Keilprofil-Wellenanordnung 20 verdoppelt sich die Amplitude der Abweichung der Winkelgeschwindigkeit $\omega 13$ bzw. $\omega 15$ von der Winkelgeschwindigkeit $\omega 0$ des Antriebs 18 gegenüber einem einzelnen Kreuzgelenk.

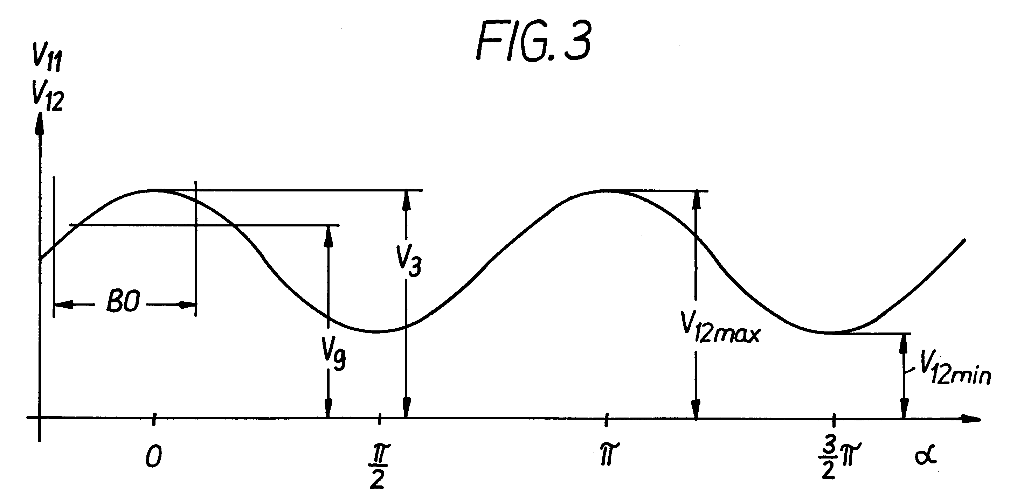

In Fig. 3 ist die der Winkelgeschwindigkeit $\omega 13$ bzw. $\omega 15$ proportionale Umlaufgeschwindigkeit $v12$ der aus den beiden Mitnehmerklinken 12 bestehenden Mitnehmerklinkenanordnung über einer Umdrehung der Welle des Antriebs 18 dargestellt.

Während einer Umdrehung der Welle des Antriebs 18 durchläuft die Umlaufgeschwindigkeit $v12$ zwei Maxima und zwei Minima. Mit "BO" ist der Bereich, in dem sich die Mitnehmerklinken 12 im Obertrum bewegen, bezeichnet. Innerhalb dieses Bereichs steigt die Umlaufgeschwindigkeit $v12$ stetig an. Nach kurzer Zeit sind die Mitnehmerklinken 12 auf die konstante Geschwindigkeit $v9$ der Klinken 9 des ersten Vorschubs beschleunigt. Die beiden Vorschubeinrichtungen 1 und 2 sind so eingestellt, daß die Klinken 12 zum Zeitpunkt gleicher Umlaufgeschwindigkeit mit der der Klinken 9 ($v9 = v12$) mit diesen auch die gleiche Position in Vorschubrichtung V einnehmen. Wie aus Fig. 3 weiter hervorgeht, wird die Umlaufgeschwindigkeit ab diesem Punkt weiter beschleunigt: Die Klinken 12 eilen den Klinken 9 voraus und übernehmen so den Vorschub der Blechtafel T. Das Maximum der Geschwindigkeit $v12$ ist so bemessen, daß es der Umfangsgeschwindigkeit $v3$ der Rollenmesser 3 entspricht.

Die zweite Vorschubeinrichtung 2 ist so ausgelegt, daß die Klinken 12 bei Erreichen der größten Geschwindigkeit $v12max = v3$ von dem Rollenmesserpaar einen Abstand haben, der im wesentlichen einer Tafellänge bzw. Streifenbreite entspricht. Im Zustand der größten Geschwindigkeit $v12max$ oder kurz davor wird die Tafel von dem Rollenmesserpaar 3 erfaßt und abgezogen (Fig. 1). Nach Erreichen der maximalen Geschwindigkeit werden die Zahnriemen 11 mit den Klinken 12 wieder verzögert, und der Abstand zwischen der durch das Rollenmesserpaar 3 abgezogenen Tafel und den Klinken 12 vergrößert sich zusehends. Während der Verzögerung der Geschwindigkeit $v12$ werden die Klinken 12 um die Zahnscheiben 13 umgelenkt, erreichen dabei ihr Minimum $v12min$, werden erneut beschleunigt, durcheilen den Bereich des Untertrum, werden erneut verzögert und um die Zahnscheiben 14 umgelenkt und zur nächsten Periode beschleunigt.

Entscheidend bei der zweiten Vorschubeinrichtung 2 ist, daß die Mitnehmerklinken 12 im Bereich des Obertrum von einer Geschwindigkeit unter der Umlaufgeschwindigkeit der ersten Vorschubeinrichtung 1 zur Umfangsgeschwindigkeit des Rollenmesserpaares 3 beschleunigt werden und daß die Mitnehmerklinken 12 bei der Umlaufgeschwindigkeit der ersten Vorschubeinrichtung im wesentlichen die gleiche Vorschubposition einnehmen wie die Klinken 9 und bei der Geschwindigkeit $v3$ einen Abstand zum Rollenmesserpaar 3 aufweisen, der einer Tafellänge entspricht.

Eine ähnlich ungleichmäßige Umlaufgeschwindigkeit kann auch durch ein Rundschalttisch-Getriebe oder durch einen NC-gesteuerten Servoantrieb bewirkt werden.

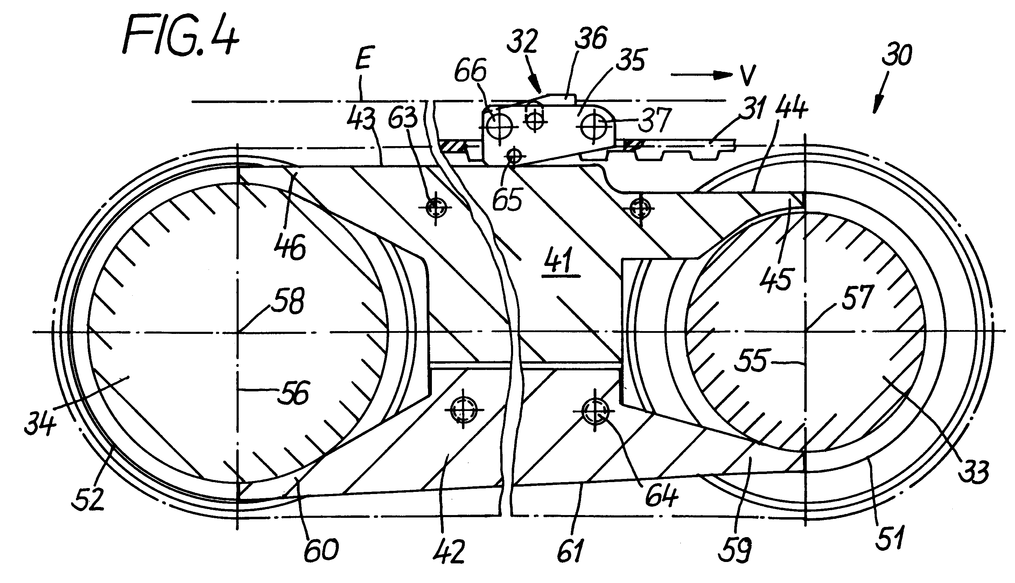

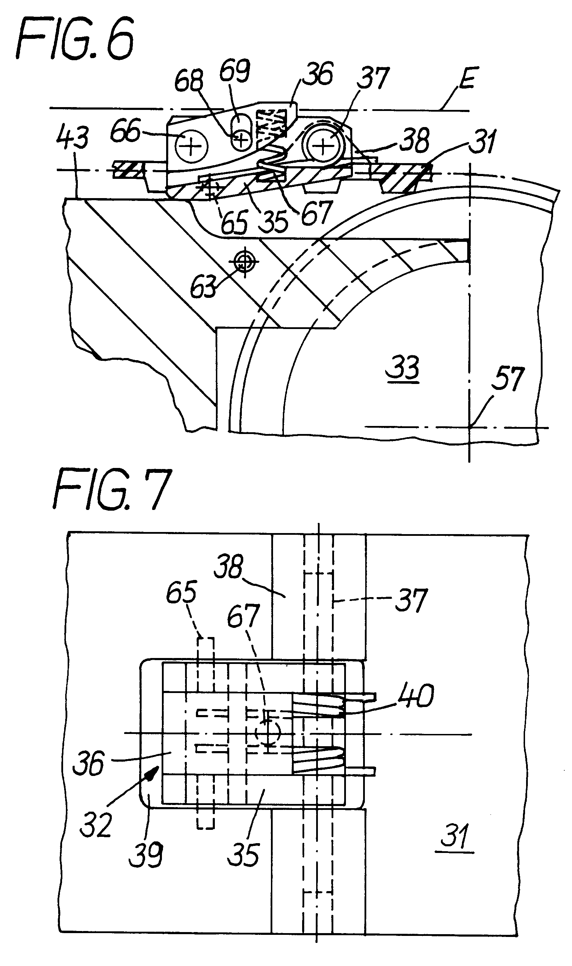

Bei dem Ausführungsbeispiel gemäß den Fig. 4 bis 8 weist die zweite Vorschubeinrichtung 30 an jeder Seite ein als Zahnriemen 31 ausgebildetes umlaufendes Zugmittel auf, an denen jeweils eine Klinkenanordnung 32 angebracht ist. Die endlosen Zahnriemen 31 werden vorne und hinten an Zahnscheibeneinheiten 33, 34 umgelenkt. Eine der Zahnscheibeneinheiten, z.B. 33, wird - synchron mit der auf der anderen Seite - mit konstanter, einstellbarer Geschwindigkeit angetrieben, so daß auch die Klinkenanordnung 32 mit konstanter Umlaufgeschwindigkeit $v32$ bewegt wird. Die Umlaufgeschwindigkeit $v32$ ist größer als die Umlaufgeschwindigkeit der ersten Vorschubeinrichtung 1 und liegt knapp unter der der Rollenmesser 3.

Die Vorschubeinrichtung 30 ist so eingerichtet, daß die beiden die Mitnehmeranordnung bildenden Klinkenanordnungen 32 parallel zu den Wellen des Rollenmesserpaares 3 fluchten.

Die Klinkenanordnung 32 weist einen Klinkenhalter 35 und eine Mitnehmerklinke 36 auf. Der im Querschnitt U-förmige Klinkenhalter 35 ist an seinem vorderen Ende an einem Bolzen 37 gelenkig gelagert, der in zwei Bolzenhaltern 38 gehalten wird, die auf jedem Zahnriemen 31 aufvulkanisiert sind. Im Bereich der Klinkenanordnung 32 weist der Zahnriemen 31 eine Ausnehmung 39 auf, in die die Klinkenanordnung hineinreicht. Der Klinkenhalter 35 wird durch eine um den Bolzen 37 gewickelte Drehfeder 40 von dem Zahmriemen 31 in Richtung auf das jeweils andere Trum bzw. in den Raum innerhalb des Zahmriemens gedrückt. Damit dies nur kontrolliert geschieht, sind im Bereich des Obertrum und des Untertrum - auf jeder Seite der Vorschubeinrichtung 2 - zwischen den Zahnscheibeneinheiten 33, 34 Formstücke 41, 42 vorgesehen, an denen die Unterseite des Klinkenhalters 35 gleiten kann.

Das obere Formstück 41 weist eine Gleitbahn 43 auf, die bei der hinteren Zahnscheibeneinheit 34 ansetzt und parallel zur Vorschubebene E verläuft. Im Bereich der vorderen Zahnscheibeneinheit 33 befindet sich eine im Vergleich mit der Gleitbahn 43 abgesetzte, tiefer gelegene Gleitbahn 44, die auf einer Art Zunge 45 des oberen Formstücks 41 angeordnet ist. Die Gleitbahn 43 bildet mit ihrem Anfang ebenfalls die obere Fläche einer Zunge 46 des Formstücks 41.

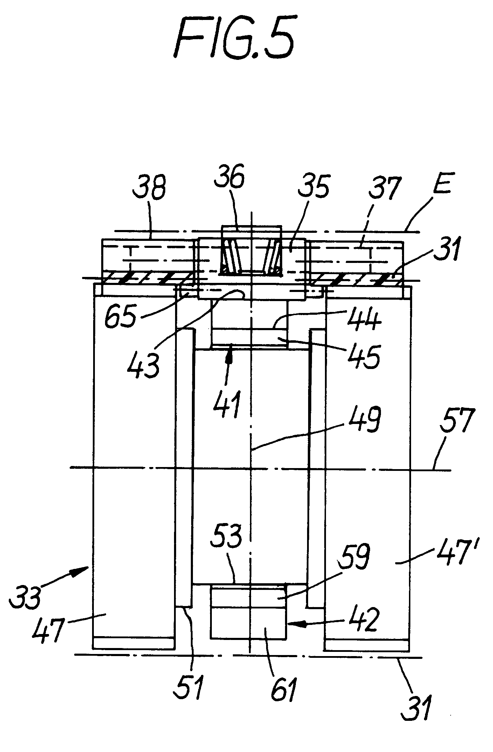

Die Zahnscheibeneinheiten 33, 34 weisen jeweils zwei äußere Zahnscheiben 47, 47' auf, an die sich in Richtung auf die gemeinsame Mittelebene 49 Absätze 51 und eine zentrische Ausnehmung 53 anschließen (Fig. 5). Die zentrische Ausnehmung 53 ist so breit, daß die Zungen 45 bzw. 46 dort hineinpassen. Der Radius der Absätze 51 entspricht dem Abstand der Gleitbahn 44 von der Achse 57 der Zahnscheibeneinheit 33 in der Übergangsebene 55.

Das untere Formstück 42 weist ähnliche Zungen 59, 60 auf. Die Zunge 59 liegt wieder in der Ausnehmung 53 der Zahnscheibeneinheit 33, die Zunge 60 in einer entsprechenden Ausnehmung der Zahnscheibeneinheit 34. Beide Zungen 59, 60 weisen eine gemeinsame Gleitbahn 61 auf. In der Übergangsebene 55 weist die Gleitbahn 61 entsprechend dem Radius der Absätze 51 den gleichen Abstand von der Achse 57 auf wie die Gleitbahn 44. An ihrem Ende, im Übergangsbereich 56, weist die Gleitbahn 61 den gleichen Abstand von der Achse 58 der Zahnscheibeneinheit 34 auf wie die Gleitbahn 43.

Die Formstücke 41, 42 sind mit Hilfe von Schrauben 63, 64 an einem (nicht dargestellten) Maschinengestell befestigt.

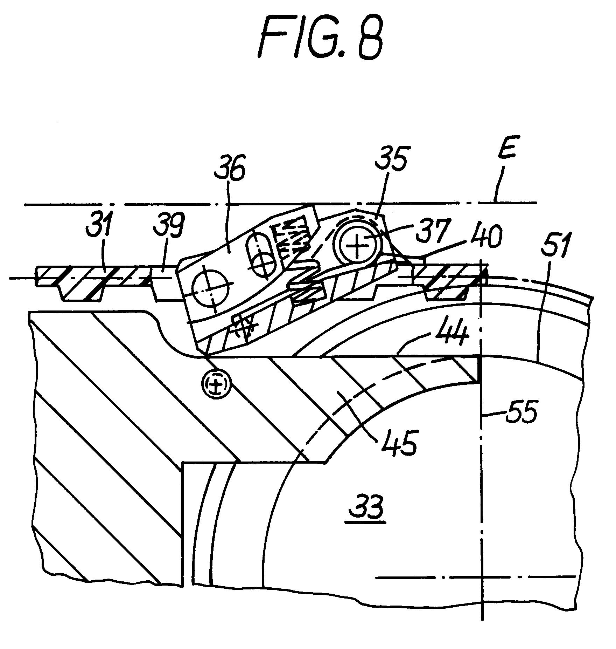

Während eines Umlaufs gleitet die Unterseite des Klinkenhalters 35 der Klinkenanordnung 32 jedes Zahnriemens 31 zunächst auf der Gleitbahn 43 (vgl. Fig. 4 bis 6). Durch die Kraft der Feder 40 vom Zahnriemen 31 nach unten weggedrückt, gleitet der Klinkenhalter 35 mit seiner Unterseite kurz vor der Umlenkung um die Zahnscheibeneinheit 33 auf der Gleitbahn 44 (Fig. 8), bei welcher Position die Mitnehmerklinke 36 unter die Transportebene E der zu transportierenden Blechtafeln T zurückgezogen wird. Beim Umlenken stützt sich der Klinkenhalter 35 über seitliche Stifte 65 auf den Absätzen 51 der Zahnscheibeneinheit 33 ab. Im Bereich des Untertrum gleitet der Klinkenhalter 35 auf der Gleitbahn 61, und die gesamte Klinkenanordnung 32 wird auf der stetig steigenden Gleitbahn 61 kontinuierlich nach außen gedrückt. Bei der Umlenkung zum Bereich des Obertrum liegt der Klinkenhalter 35 über die Stifte 65 auf den seitlichen Absätzen 52 der Zahnscheibeneinheit 34 auf, und es erfolgt ein stoßfreier Übergang auf die Gleitbahn 43.

Eine über ein Zugmittel hinausragende feste Klinke weist im Bereich der Umlenkung eine ihrem Abstand von der Umlenkachse entsprechende größere Geschwindigkeit auf als die Umlaufgeschwindigkeit des Zugmittels. Im Falle einer mit der Umlaufgeschwindigkeit des Zugmittels bewegten Tafel würde diese im Übergangsbereich aus der geraden Bewegung der Klinke in die Kreisbahn entweder entsprechend beschleunigt oder - wenn die Tafel mit konstanter Geschwindigkeit abgezogen wird - gestaucht werden. Dies wird selbst bei konstanter Umlaufgeschwindigkeit bei dieser Ausführungsform dadurch verhindert, daß die Mitnehmerklinken 36 durch das "Runterfallen" bzw. "Abtauchen" der Klinkenhalter 35 sowohl in Vorschubrichtung V als auch in der Höhe zurückgezogen wird.

Die Stifte 65 dienen auch zum Schutz gegen ein "Herausfliegen" der Klinkenanordnung 32 aus der Öffnung 39 im Falle von starken Fliehkräften. Die seitlichen Stifte 65 liegen an der Unterseite des Zahnriemens 31 an, wobei der Zahn des Zahnriemens an der betreffenden Stelle entfernt ist.

Damit die Mitnehmerklinken 36 einer überholenden Blechtafel ausweichen können, sind sie um einen Bolzen 66 des Klinkenhalters 35 gelagert. Durch eine Druckfeder 67 wird die Vorschubkante der Klinken 36 nach außen gedrückt. Ein Bolzen 68 im Klinkenhalter und ein Langloch 69 in den Mitnehmerklinken 36 bestimmen deren Endlage.

**Patentansprüche**

1.  Vorschubeinrichtung mit einem mit konstanter Geschwindigkeit umlaufenden, mit Mitnehmerklinken (12) versehenen Zugmittel zum Transportieren von Tafeln (T) in eine Arbeitsstation mit gleichbleibender Durchlaufgeschwindigkeit, in die die Tafeln mit einer Anfangsgeschwindigkeit einlaufen, die mindestens so groß ist wie die Umlaufgeschwindigkeit des Zugmittels,
    **dadurch gekennzeichnet**,

    daß im Bereich der Vorschubeinrichtung (1) eine weitere Vorschubeinrichtung (2; 30) angeordnet ist, die ein von einer Antriebsanordnung (18) angetriebenes umlaufendes Zugmittel (11; 31) mit einer quer zur Vorschubeinrichtung (V) angeordneten Mitnehmeranordnung (12; 32) aufweist,
    daß das umlaufende Zugmittel (11; 31) durch die Antriebsanordnung (18) mit periodisch variabler Umlaufgeschwindigkeit bewegbar ist, deren Minimum kleiner oder gleich der Umlaufgeschwindigkeit der ersten Vorschubeinrichtung (1) und deren Maximum größer als die Umlaufgeschwindigkeit der ersten Vorschubeinrichtung und kleiner oder gleich der Anfangsgeschwindigkeit in der Arbeitsstation (3) ist und

daß sich die Mitnehmeranordnung (12; 32) zumindest am Ende der Beschleunigungsphase im Bereich des Obertrum befindet.

2. Vorschubeinrichtung mit einem mit konstanter Geschwindigkeit umlaufenden, mit Mitnehmerklinken (12) versehenen Zugmittel zum Transportieren von Tafeln (T) in eine Arbeitsstation mit gleichbleibender Durchlaufgeschwindigkeit, in die die Tafeln mit einer Anfangsgeschwindigkeit eintreten, die mindestens so groß ist wie die Umlaufgeschwindigkeit des Zugmittels, dadurch gekennzeichnet,

daß im Bereich der Vorschubeinrichtung (1) eine weitere Vorschubeinrichtung (30) angeordnet ist, die ein von einer Antriebsanordnung angetriebenes umlaufendes Zugmittel (31) mit einer quer zur Vorschubrichtung (V) angeordneten Mitnehmeranordnung (32) aufweist und daß die Mitnehmeranordnung (32) Mitnehmerklinken (36) aufweist, die von vor dem Übergang aus der geradlinigen Bewegung des Obertrum in die Umlenkbewegung Richtung Untertrum zumindest bis in einen Anfangsbereich der Umlenkbewegung hinein eine unterhalb der Transportebene (E) der Tafeln (T) befindliche Position einnehmen.

3. Vorschubeinrichtung nach Anspruch 1, dadurch gekennzeichnet, daß die Mitnehmeranordnung (32) Mitnehmerklinken (36) aufweist, die von vor dem Übergang aus der geradlinigen Bewegung in die Umlenkbewegung Richtung Untertrum zumindest bis in einen Anfangsbereich der Umlenkbewegung hinein eine unterhalb der Transportebene (E) der Tafeln (T) befindliche Position einnehmen.

4. Vorschubeinrichtung nach Anspruch 1 oder 3, dadurch gekennzeichnet, daß eine Achse (15; 57) der weiteren Vorschubeinrichtung (2; 30) mit der Achse des Antriebs (18) über ein Kreuzgelenk (21) verbunden ist, wobei die das Kreuzgelenk (21) bildenden Achsen einen Winkel (β) bilden.

5. Vorschubeinrichtung nach Anspruch 4, dadurch gekennzeichnet, daß zwischen den Achsen (15; 57) des weiteren Vorschubs (2; 30) und der Welle des Antriebs (18) ein zweites Kreuzgelenk (22) vorgesehen ist und daß die Achse (15; 57) des weiteren Vorschubs (2; 30), die zwischen den Kreuzgelenken (21, 22) angeordnete Gelenkwelle (20) und die Achse des Antriebs (18) eine Z-förmige Anordnung aufweisen, wobei die Kreuzgelenkachsen (21, 22) der Gelenkwelle (20) bzw. deren Gelenkgabeln um 90° gegeneinander verdreht sind.

## Claims

1. Feeding device with a traction means revolving at constant speed and fitted with driver ratchets (12) for transporting sheets (T) into a work station at constant passage speed, into which the sheets run at an initial speed which is at least as high as the rotational speed of the traction means, characterised in that in the region of the feeding device (1), a further feeding device (2; 30) is disposed, which has a revolving traction means (11; 31) driven by a drive arrangement(18) and with a driver arrangement (12; 32) disposed transversely to the direction of feed (V);

that the revolving traction means (11; 31) may be moved by the drive arrangement (18) at a periodically variable rotational speed, the minimum of which is lower or equal to the rotational speed of the first feeding device (1), and its maximum is higher than the rotational speed of the first feeding device and lower or equal to the initial speed in the drive unit (3); and that, at least at the end of the acceleration phase, the driver arrangement (12; 32) is located in the region of the upper strand.

2. Feeding device with a traction means revolving at constant speed and fitted with driver ratchets (12) for transporting sheets (T) into a work station at constant passage speed, in which the sheets enter at an initial speed which is at least as high as the rotational speed of the traction means, characterised in that in the region of the feeding device (1), a further feeding device (30) is disposed, which has a revolving traction means (31) driven by a drive arrangement, with a driver arrangement (32) disposed transversely to the direction of feed (V); and that the driver arrangement (32) has driver ratchets (36), which, from before the transition from the linear movement of the upper strand to the deflection movement in the direction of the lower strand at least as far as a starting region of the deflection movement, assume a position situated below the transport plane (E) of the sheets (T).

3. Feeding device according to Claim 1, characterised in that the driver arrangement (32) has driver ratchets (36), which, from before the transition from the linear movement to the deflection movement in the direction of the lower strand at least as far as a starting region of the deflection movement, assume a position situated below the transport plane (E) of the sheets (T).

4. Feeding device according to Claim 1 or 3, characterised in that an axle (15; 57) of the further feeding device (2; 30) is connected to the axle of the drive (18) via a universal joint (21), whereby the axles forming the universal joint (21) form an angle (β).

5. Feeding device according to Claim 4, characterised in that a second universal joint (22) is provided between the axles (15; 57) of the further feed (2; 30) and the shaft of the drive (18); and that the axle (15; 57) of the further feed (2; 30), the universal drive shaft (20) arranged between the universal joints (21, 22) and the axle of the drive (18) have a Z-shaped arrangement, whereby the universal joint axles (21, 22) of the universal drive shaft (20) or its articulated yokes are rotated 90° relative to one another.

## Revendications

1. Dispositif d'avance, comportant un moyen de traction circulant à vitesse constante et équipé de cliquets entraîneurs (12) pour transporter des plaques (T) dans une station d'usinage comportant une vitesse de passage constante, dispositif dans lequel les plaques pénètrent avec une vitesse d'entrée qui est au moins aussi grande que la vitesse circulaire du moyen de traction,
     caractérisé

     en ce que, dans la zone du dispositif d'avance (1), est installé un autre dispositif d'avance (2; 30), qui présente un moyen de traction rotatif (11; 31) entraîné par un dispositif d'entraînement (18), avec un dispositif à entraîneurs (12; 32) diposé transversalemant à la direction d'avancement (V),
     en ce que le moyen de traction rotatif (11; 31) peut se déplacer au moyen du dispositif d'entraînement (18) avec une vitesse circulaire variable périodiquement, dont le minimum est inférieur ou égal à la vitesse circulaire du premier dispositif d'avance (1) et dont le maximum est supérieur à la vitesse circulaire du premier dispositif d'avance (1) et inférieur ou égal à la vitesse d'entrée dans la station d'usinage (3),
     et en ce que le dispositif à entraîneurs (12; 32) se trouve, au moins à la fin de la phase d'accélération, dans la zone du brin supérieur.

2. Dispositif d'avance, comportant un moyen de traction circulant à vitesse constante et équipé de cliquets entraîneurs (12) pour transporter des plaques (T) dans une station d'usinage comportant une vitesse de passage constante, dispositif dans lequel les plaques pénètrent avec une vitesse d'entrée qui est au moins aussi grande que la vitesse circulaire du moyen de traction,
     caractérisé

     en ce que, dans la zone du dispositif d'avance (1), est installé un autre dispositif d'avance (30), qui présente un moyen de traction rotatif (31) entraîné par un dispositif d'entraînement , avec un dispositif à entraîneurs (32) diposé transversalemant à la direction d'avancement (V),
     et en ce que le dispositif à entraîneurs (32) présente des cliquets entraîneurs (36), qui prennent une position située en-dessous du plan de transport (E) des plaques (T) depuis avant le passage du movement rectiligne du brin supérieur au movement de renvoi vers le brin inférieur jusqu'à, au moins à pénétrer dans une zone où commence le movement de renvoi.

3. Dispositif d'avance suivant la revendication 1, caractérisé en ce que le dispositif à entraîneurs (32) présente des cliquets entraîneurs (36), qui prennent une position située en-dessous du plan de transport (E) des plaques (T) depuis avant le passage du movement rectiligne au movement de renvoi vers le brin inférieur jusqu'à, au moins à pénétrer dans une zone où commence le movement de renvoi.

4. Dispositif d'avance suivant la revendication 1 ou la revendication 3, caractérisé en ce qu'un axe (15; 57) de l'autre dispositif d'avance (2; 30), est relié à l'axe de l'entraînement (18) par un cardan (21), les axes constituant le cardan (21) formant un angle (β).

5. Dispositif d'avance suivant la revendication 4, caractérisé en ce qu'entre les axes (15; 57) de l'autre dispositif d'avance (2; 30) et l'arbre de l'entraînement (18), est prévu un deuxième cardan (22) et en ce que l'axe (15; 57) de l'autre dispositif d'avance (2; 30), l'arbre d'articulation (20) disposé entre les cardan (21, 22), et l'axe de l'entraînement (18) présente une disposition en forme de Z. les axes des cardans (21, 22) de l'arbre d'articulation (20), ou leurs fourches d'articulation, ayant une direction formant, l'une part de l'autre, un angle de 90°.

FIG.1

FIG. 2

EP 0 564 901 B1

FIG. 3

FIG.4

EP 0 564 901 B1

# FIG.5

# FIG. 6

# FIG. 7

# FIG. 8